# EUROPÄISCHE PATENTSCHRIFT

(11) **EP 2 320 294 B1**
(45) Veröffentlichungstag und Bekanntmachung des Hinweises auf die Patenterteilung: **05.12.2012**
(21) Anmeldenummer: 10187351.1
(22) Anmeldetag: 13.10.2010
(51) Int. Cl.: G05D 23/19

(54) **Elektronische Anschlussvorrichtung für eine Raumtemperaturregelanlage zum Regeln der Raumtemperatur in warmwasserbeheizten Räumen**
Electronic connection device for an area temperature regulation assembly for regulating the area temperature in areas heated by hot water
Dispositif de raccordement électronique pour une installation de température ambiante destinée à réguler la température ambiante dans des pièces chauffées à l'eau chaude

(30) Priorität: 10.11.2009 DE 102009046571
(43) Veröffentlichungstag der Anmeldung: 11.05.2011
(73) Patentinhaber: AFRISO-Euro-Index GmbH, 74363 Güglingen (DE)
(72) Erfinder: Aldinger, Ulrich Dr., 70192 Stuttgart (DE)
(74) Vertreter: Kohler Schmid Möbus

(56) Entgegenhaltungen:
- WO-A1-2008/097992
- DE-A1- 19 719 232
- US-A1- 2005 049 754

## Beschreibung

Die Erfindung betrifft eine elektronische Anschlussvorrichtung für eine Raumtemperaturregelanlage zum Regeln der Raumtemperatur in warmwasserbeheizten Räumen gemäß Oberbegriff von Anspruch 1.

Eine Raumtemperaturregelanlage besteht im Allgemein aus folgenden drei Teilen:
- jeweils mindestens einem Raumtemperaturfühler pro Raum;
- jeweils mindestens einem Stellantrieb pro Raumtemperaturfühler, wobei der Stellantrieb beispielsweise an einem Warmwasserventil angebracht ist und den Warmwasserfluss steuert; und
- einem oder mehreren elektronischen Steuerschaltungen, die die Stellantriebe jeweils anhand der Signale von den Raumtemperaturfühlern ansteuern.

Hierbei sind zwei verschiedene Ausführungen bekannt:
1. Alle oben genannten Komponenten der Raumtemperaturregelanlage werden mit der Netzspannung (d.h. mit 230V) betrieben;
2. Alle oben genannten Komponenten der Raumtemperaturregelanlage werden mit einer Kleinspannung (z.B. 24V) betrieben.

Bei der ersten Ausführung ist von Nachteil, dass die auch im Wohnbereich angeordneten Raumtemperaturfühler mit 230V Netzspannung betrieben werden, was einen hohen Berührungsschutz, eine Gefahr für Kinder und Elektrosmog bedeutet. Ein weiterer Nachteil ist dabei, dass die 230V-Spannung jedes Raumtemperaturfühlers für die mit Kleinspannung betriebene elektronische Regelung auf diese Kleinspannung heruntergesetzt werden muss, was zusätzlichen Aufwand und Wärmeverluste mit sich bringt.

Bei der zweiten Ausführung ist von Nachteil, dass ein großer und aufwendiger Transformator 230V/24V benötigt wird, da die Stellantriebe bei der niedrigen Spannung von 24V viel Strom verbrauchen.

Aus WO 2008/097992 A1 ist weiterhin ein Modulaufbau eines Gebäudeautomationssteuersystems bekannt, bei dem die einzelnen Module alle an einen Powerbus angeschlossen sind, der sowohl eine 120V-Netzspannung als auch eine 5V Kleinspannung führt. Über den Powerbus sind allen Modulen die 120V-Netzspannung und die 5V-Kleinspannung bereitgestellt, sodass kein Netzteil zum Transformieren der Netzspannung auf die Kleinspannung vorhanden ist. Weiterhin sind die einzelnen Module des Modulaufbaus separate Module, die mittelbar über den Powerbus miteinander elektrisch verbunden sind.

Der Erfindung liegt daher die Aufgabe zugrunde, bei einer Anschlussvorrichtung der eingangs genannten Art die Energieeffizienz zu erhöhen und gleichzeitig die Gefahren für einen Nutzer zu reduzieren.

Diese Aufgabe wird erfindungsgemäß durch eine elektronische Anschlussvorrichtung für eine Raumtemperaturregelanlage zum Regeln der Raumtemperatur in warmwasserbeheizten Räumen mit den Merkmalen von Anspruch 1 gelöst.

Die Erfindung basiert auf der Idee, dass die relativ viel Energie konsumierenden Stellantriebe an die Netzspannung (z.B. 230V) angeschlossen sind, während die empfindlichen elektrischen Schaltkreise sowie die Raumtemperaturfühler mit einer wesentlich niedrigeren Gleich- bzw. Kleinspannung (z. B. 5V) betrieben werden. Zu diesem Zweck weist die Anschlussvorrichtung erfindungsgemäß ein zentrales Netzteil auf, das an die Netzspannung angeschlossen wird und das die Netzspannung zentral auf die Kleinspannung für die elektronischen Schaltkreise und für die Raumtemperaturfühler transformiert. Die für die Ansteuerung der Stellantriebe vorgesehenen Anschlüsse liegen an der Netzspannungsleitung, während die Kleinspannungsleitung zum einen die Schaltkreise der Steuerschaltungen versorgt und zum anderen die Anschlüsse zur Versorgung der entsprechenden Raumtemperaturfühler aufweist. Die erfindungsgemäße Anschlussvorrichtung hat damit den wesentlichen Vorteil, dass ein eigenes Netzteil für jeden Raumtemperaturfühler entfällt und die energieintensiveren Stellantriebe direkt an die nicht transformierte Netzspannung angeschlossen werden. Neben der daraus resultierenden hohen Energieeffizienz der gesamten Regelanlage gehen von den Raumtemperaturfühlern aufgrund der Kleinspannung keine Gefahren für einen Nutzer aus, so dass die Raumtemperaturfühler auch an für Kinder zugänglichen Stellen in Wohnräumen und Nassräumen angebracht und bedenkenlos auch in Schlaf- und Wohnräumen verwendet werden können, da aufgrund der DC-Kleinspannung kein Elektrosmog entsteht.

An das Netzteilmodul sind wiederum ein oder mehrere Anschlussmodule angeschlossen, welche jeweils mindestens eine Steuerschaltung aufweisen. Dies ermöglicht eine modulare Bauweise und dadurch eine individuelle Erweiterung auf die gewünschte Anzahl von Steuerschaltungen. Das Netzteilmodul kann entweder nur das zentrale Netzteil und weitere zentrale Komponenten, wie z.B. Uhr, Pumpenlogik oder Ventilschutz, oder zusätzlich bereits eine oder mehrere Steuerschaltungen aufweisen.

Vorzugsweise sind in der gesamten Anschlussvorrichtung die mit Netzspannung betriebene Seite und die mit Kleinspannung betriebene Seite durch eine Potentialtrennung, z.B. galvanisch mittels Optokopplern oder mittels Relais, voneinander getrennt.

In einer vorteilhaften Ausführungsform erstrecken sich in dem Netzteilmodul die Netzspannungsleitung und ausgehend vom zentralen Netzteil eine Kleinspannungsleitung jeweils bis zu der ausgangsseitigen Modulanschlussseite des Netzteilmoduls, an die ein Anschlussmodul mit seiner eingangsseitigen Modulanschlussseite anschließbar ist. In jedem Anschlussmodul erstrecken sich ausgehend von elektrischen Anschlusskontakten an seiner eingangsseitigen Modulanschlussseite die Netz- und Kleinspannungsleitungen sowie Leitungen, die an zentrale Komponenten des Netzteilmoduls (Uhr, Pumpenlogik, Ventilschutz) angeschlossen sind, bis zu elektrischen Anschlusskontakten an seiner ausgangsseitigen Modulanschlussseite, damit auch das jeweils nächste Anschlussmodul an diese Leitungen angeschlossen ist. Vorzugsweise sind die Anschlussmodule identisch ausgebildet, wobei die eingangsseitige Modulanschlussseite eines Anschlussmoduls und die ausgangsseitige Modulanschlussseite eines anderen Anschlussmoduls aneinander anschließbar sind und jedes Modul eine Potentialtrennung zwischen der mit Netzspannung betriebenen Seite und der mit Kleinspannung betriebenen Seite aufweist.

Die Erfindung betrifft auch eine Raumtemperaturregelanlage mit einer wie oben ausgebildeten Anschlussvorrichtung, wobei an jede Steuerschaltung ein oder mehrere mit Kleinspannung betriebene Raumtemperaturfühler sowie ein oder mehrere mit Netzspannung betriebene Stellantriebe angeschlossen sind.

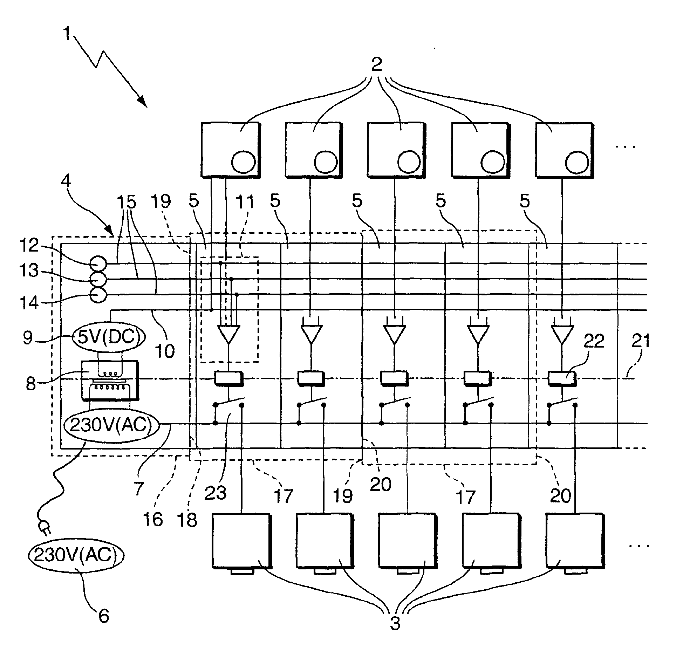

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung. Die Erfindung ist in einem Ausführungsbeispiel in der Zeichnung dargestellt und wird in der nachfolgenden Beschreibung näher erläutert.

Die in der einzigen Figur schematisch gezeigte elektronische Raumtemperaturregelanlage **1** dient zum Regeln der Raumtemperatur in warmwasserbeheizten Räumen und umfasst mehrere Raumtemperaturfühler **2,** mehrere Stellantriebe **3** von Warmwasserventilen sowie eine Anschlussvorrichtung **4** zum Anschließen der Raumtemperaturfühler 2 und der Stellantriebe 3. Die Anschlussvorrichtung 4 weist mehrere Steuerschaltungen **5** auf, welche die Stellantriebe 3 anhand der Signale von einem oder mehreren Raumtemperaturfühlern 2 ansteuern, wobei der Einfachheit halber jeweils nur ein Raumtemperaturfühler 2 und ein Stellantrieb 3 pro Steuerschaltung 5 gezeigt sind.

Die Anschlussvorrichtung 4 weist eine an eine 230V(AC)-Netzspannung **6** angeschlossene Netzspannungsleitung **7** auf, an die jede Steuerschaltung 5 zur Versorgung ihres mit 230V-Netzspannung 6 betriebenen Stellantriebes 3 angeschlossen ist. Die Stellantriebe 3, die zum Steuern der Warmwasserzufuhr an den entsprechenden Heizungsventilen dienen, benötigen relativ viel elektrische Energie und werden daher von der Anschlussvorrichtung 4 zentral mit der 230V-Netzspannung 6 versorgt. An die Netzspannungsleitung 7 ist ein zentrales Netzteil **8** angeschlossen, das die 230V(AC)-Netzspannung 6 auf eine niedrigere Kleinspannung (Gleichspannung) **9,** z.B. 5V(DC), transformiert, die über eine Kleinspannungsleitung **10** an jede Steuerschaltung 5 zur Versorgung ihres mit Kleinspannung betriebenen elektronischen Schaltkreises **11** weitergeleitet ist. Die Raumtemperaturfühler 2 werden ebenfalls mit der Kleinspannung, z.B. 5V (DC), betrieben und sind dazu entweder auch an die Kleinspannungsleitung 10 angeschlossen oder weisen bei Funkbetrieb eine eigene Batterie auf.

Die Anschlussvorrichtung 4 weist außerdem noch eine Uhr **12,** eine Pumpenlogik **13** und einen Ventilschutz **14** auf, die mit der 5V(DC)-Kleinspannung 9 betrieben werden und über Steuerleitungen **15** an die Schaltkreise 11 der Steuerschaltungen 5 und an die Raumtemperaturfühler 2 weitergeleitet sind.

Das zentrale Netzteil 8, die Uhr 12, die Pumpenlogik 13 und der Ventilschutz 14 sind in einem Netzteilmodul **16** angeordnet, an das ein oder mehrere Anschlussmodule **17** anschließbar sind. Im gezeigten Ausführungsbeispiel weist jedes Anschlussmodul 17 zwei Steuerschaltungen 5 auf.

In dem Netzteilmodul 16 erstrecken sich die Netz- und Kleinspannungsleitungen 7, 10 sowie die Steuerleitungen 15 jeweils bis zu elektrischen Anschlusskontakten (nicht gezeigt) an der ausgangsseitigen Modulanschlussseite **18** des Netzteilmoduls **16,** an die das Anschlussmodul 17 mit seiner eingangsseitigen Modulanschlussseite **19** über elektrische Anschlusskontakte (nicht gezeigt) angeschlossen ist. Die Anschlussmodule 17 können identisch ausgebildet sein, wobei die ausgangsseitige Modulanschlussseite **20** eines Anschlussmoduls 17 und die eingangsseitige Modulanschlussseite 19 eines anderen Anschlussmoduls 17 über elektrische Anschlusskontakte (nicht gezeigt) aneinander anschließbar sind. In jedem Anschlussmodul 17 erstrecken sich ausgehend von elektrischen Anschlusskontakten an der eingangsseitigen Modulanschlussseite 19 die Netz- und Kleinspannungsleitungen 7, 10 sowie die Steuerleitungen 15 bis zu elektrischen Anschlusskontakten an der ausgangsseitigen Modulanschlussseite 20. Die Spannungsleitung 7 zieht sich ausgehend vom Netzteilmodul 16 durch alle angeschlossenen Anschlussmodule 17 durch, um alle Stellantriebe 3 mit der 230V-Netzspannung 6 zu versorgen. Die Kleinspannungsleitung 10 und die Steuerleitungen15 ziehen sich ausgehend vom Netzteilmodul 16 durch alle angeschlossenen Anschlussmodule 17 durch, um alle Schaltkreise 11 - ggf. auch die Raumtemperaturfühler 2 - mit der 5V-Kleinspannung 9 und mit den Steuersignalen des Netzteilmoduls 16 zu versorgen.

Jedes Modul 16, 17 weist zwischen der 230V-Netzspannung 6 und der 5V-Kleinspannung 9 eine galvanische Potentialtrennung **21** auf, die mittels Optokopplern oder Relais **22** ausgebildet ist.

Die Funktionsweise der Raumtemperaturregelanlage 1 ist wie folgt:
Jeder Raumtemperaturfühler 2 misst die Raumtemperatur und vergleicht das Signal mit der für diesen Raum eingestellten Solltemperatur. Das Ergebnis wird per Draht oder Funk an den Schaltkreis 11 der zugehörigen Steuerschaltung 5 weitergeleitet, die abhängig vom Signal des Raumtemperaturfühlers 2 und unter Einbeziehung der Steuersignale von Uhr 12, Pumpenlogik 13 und Ventilschutz 14 den jeweiligen Stellantrieb 3 ansteuert. Das binäre 5V-Ausgangssignal des Schaltkreises 11 wird über den Optokoppler/Relais 22 als Steuersignal an einen Ein-Aus-Schalter **23** weitergegeben, der an die Netzspannungsleitung 7 angeschlossen ist und die 230V-Netzspannung an den Stellantrieb 3 schaltet, um so das Ventil für das Heizungswasser im entsprechenden Raum zu öffnen oder zu schließen.

## Patentansprüche

1. Anschlussvorrichtung (4) einer Raumtemperaturregelanlage (1) zum Regeln der Raumtemperatur in warmwasserbeheizten Räumen,
mit einer oder mehreren Steuerschaltungen (5) zum Ansteuern eines oder mehrerer Stellantriebe (3) von Warmwasserventilen anhand der Signale von einem oder mehreren Raumtemperaturfühlern (2) und
mit einer an eine Netzspannung (6) angeschlossenen Netzspannungsleitung (7), an die jede Steuerschaltung (5) zur Versorgung der mit Netzspannung (6) betriebenen Stellantriebe (3) angeschlossen ist, **dadurch gekennzeichnet,**
**dass** die Anschlussvorrichtung (4) durch ein Netzteilmodul (16) und mindestens ein daran angeordnetes, jeweils mindestens eine Steuerschaltung (5) aufweisendes Anschlussmodul (17) gebildet ist,
**dass** ausschließlich das Netzteilmodul (16) an die Netzspannung (6) angeschlossen ist und ein zentrales Netzteil (8) aufweist, das die Netzspannung (6) auf eine niedrigere Kleinspannung (9) transformiert,
**dass** jedes Anschlussmodul (17) sowohl an die Netzspannungsleitung (7) des Netzteilmoduls (16) zur Versorgung der mit Netzspannung (6) betriebenen Stellantriebe (3) als auch an eine vom zentralen Netzteil (8) ausgehende Kleinspannungsleitung (10) des Netzteilmoduls (16) zur Versorgung der mit der Kleinspannung (9) betriebenen elektronischen Schaltkreise (11) der Steuerschaltungen (5) angeschlossen ist, und
**dass** in der gesamten Anschlussvorrichtung (4) die mit Netzspannung (6) betriebene Seite und die mit Kleinspannung (9) betriebene Seite durch eine Potentialtrennung (21) voneinander getrennt sind.

2. Anschlussvorrichtung nach Anspruch 1, **dadurch gekennzeichnet, dass** die Kleinspannung (9) an jede Steuerschaltung (5) zur Versorgung der mit Kleinspannung (9) betriebenen Raumtemperaturfühler (2) weitergeleitet ist.

3. Anschlussvorrichtung nach einem der vorhergehenden Ansprüche, **dadurch gekennzeichnet, dass** die Anschlussvorrichtung (4) eine Uhr (12) und/oder eine Pumpenlogik (13) und/oder einen Ventilschutz (14) aufweist, deren Signale über Leitungen (15) an jede Steuerschaltung (5) weitergeleitet sind.

4. Anschlussvorrichtung nach einem der vorhergehenden Ansprüche, **dadurch gekennzeichnet, dass** in dem Netzteilmodul (16) auch eine oder mehrere Steuerschaltungen (5) angeordnet sind.

5. Anschlussvorrichtung nach einem der vorhergehenden Ansprüche, **dadurch gekennzeichnet, dass** sich in dem Netzteilmodul (16) die Netzspannungsleitung (7) und die Kleinspannungsleitung (10) jeweils bis zu der ausgangsseitigen Modulanschlussseite (18) des Netzteilmoduls (16) erstrecken, an die ein Anschlussmodul (17) mit seiner eingangsseitigen Modulanschlussseite (19) anschließbar ist.

6. Anschlussvorrichtung nach einem der vorhergehenden Ansprüche, **dadurch gekennzeichnet, dass** sich in jedem Anschlussmodul (17) ausgehend von elektrischen Anschlusskontakten an seiner eingangsseitigen Modulanschlussseite (19) die Netz- und Kleinspannungsleitungen (7, 10) bis zu elektrischen Anschlusskontakten an seiner ausgangsseitigen Modulanschlussseite (20) erstrecken.

7. Anschlussvorrichtung nach Anspruch 5 oder 6, **dadurch gekennzeichnet, dass** die eingangsseitige Modulanschlussseite (19) eines Anschlussmoduls (17) und die ausgangsseitige Modulanschlussseite (20) eines anderen Anschlussmoduls (17) aneinander anschließbar sind.

8. Anschlussvorrichtung nach einem der vorhergehenden Ansprüche, **dadurch gekennzeichnet, dass** in jedem Modul (16, 17) die mit Netzspannung (6) betriebene Seite und die mit Kleinspannung (9) betriebene Seite durch eine Potentialtrennung (21) voneinander getrennt sind.

9. Anschlussvorrichtung nach einem der vorhergehenden Ansprüche, **dadurch gekennzeichnet, dass** das Netzteilmodul (16) eine Uhr (12) und/oder eine Pumpenlogik (13) und/oder einen Ventilschutz (14) aufweist, deren Signale über Leitungen (15) an elektrische Anschlusskontakte der ausgangsseitigen Modulanschlussseite (18) des Netzteilmoduls (16) und von elektrischen Anschlusskontakten an der eingangsseitigen Modulanschlussseite (19) bis zu elektrischen Anschlusskontakten an der ausgangsseitigen Modulanschlussseite (20) eines Anschlussmoduls (17) weitergeleitet sind.

10. Raumtemperaturregelanlage (1) mit einer Anschlussvorrichtung (4) nach einem der vorhergehenden Ansprüche, wobei an jede Steuerschaltung (5) ein oder mehrere mit Kleinspannung (9) betriebene Raumtemperaturfühler (2) sowie ein oder mehrere mit Netzspannung (6) betriebene Stellantriebe (3) angeschlossen sind.

## Claims

1. Connecting device (4) for a room temperature control system (1) for controlling the room temperature in rooms heated with hot water, having one or more control circuits (5) for driving one or more actuating drives (3) of hot water valves by using the signals from one or more room temperature sensors (2), and having a mains supply line (7) which is connected to a mains voltage (6) and to which each control circuit (5) is connected to supply the actuating drives (3), which are operated with mains voltage (6),
**characterized**
**in that** the connecting device (4) is formed by a power supply module (16) and at least one connecting module (17) arranged thereon and in each case having at least one control circuit (5),
**in that** only the power supply module (16) is connected to the mains voltage (6) and has a central power supply unit (8) which transforms the mains voltage (6) to a lower voltage (9),
**in that** each connecting module (17) is connected both to the mains voltage line (7) of the power supply module (16) for supplying the actuating drives (3) operated with mains voltage (6) and also to a low voltage line (10), which originates from the central power supply unit (8), of the power supply module (16) for supplying the electronic circuits (11) of the control circuits (5) operated with the low voltage (9), and
**in that**, in the entire connecting device (4), the side operated with mains voltage (6) and the side operated with low voltage (9) are isolated from each other by a potential isolating means (21).

2. Connecting device according to Claim 1, **characterized in that** the low voltage (9) is conducted onward to each control circuit (5) for supplying the room temperature sensors (2) operated with low voltage (9).

3. Connecting device according to one of the preceding claims, **characterized in that** the connecting device (4) has a clock (12) and/or pump logic (13) and/or valve protection (14), the signals from which are forwarded to each control circuit (5) via lines (15).

4. Connecting device according to one of the preceding claims, **characterized in that** one or more control circuits (5) are also arranged in the power supply module (16).

5. Connecting device according to one of the preceding claims, **characterized in that**, in the power supply unit (16), the mains voltage line (7) and the low voltage line (10) respectively extend as far as the module connection side (18) on the output side of the power supply module (16), to which side a connection module (17) can be connected by its module connection side (19) on its input side.

6. Connecting device according to one of the preceding claims, **characterized in that**, in each connection module (17), starting from electrical connection contacts on its module connection side (19) on its input side, the mains and low voltage lines (7, 10) extend as far as electrical connecting contacts on its module connection side (20) on its output side.

7. Connecting device according to Claim 5 or 6, **characterized in that** the module connection side (19) on the input side of a connection module (17) and the module connection side (20) on the output side of another connection module (17) can be connected to each other.

8. Connecting device according to one of the preceding claims, **characterized in that**, in each module (16, 17), the side operated with mains voltage (6) and the side operated with low voltage (9) are isolated from each other by a potential isolating means (21).

9. Connecting device according to one of the preceding claims, **characterized in that** the power supply module (16) has a clock (12) and/or pump logic (13) and/or valve protection(14), the signals from which are forwarded via lines (15) to electrical connecting contacts of the module connection side (18) on the output side of the power supply module (16) and from electrical connecting contacts on the module connection side (19) on the input side as far as electrical connecting contacts on the module connection side (20) on the output side of a connection module (17).

10. Room temperature control system (1) having a connecting device (4) according to one of the preceding claims, one or more room temperature sensors (2) operated with low voltage (9) and also one or more actuating drives (3) operated with mains voltage (6) being connected to each control circuit (5).

## Revendications

1. Dispositif de raccordement (4) d'une installation de régulation de température ambiante (1) destinée à réguler la température ambiante dans des pièces chauffées à l'eau chaude, comprenant un ou plusieurs circuits de commande (5) pour commander un ou plusieurs actionneurs (3) de vannes d'eau chaude à l'aide des signaux d'une ou plusieurs sondes de température ambiante (2) et comprenant une ligne de tension secteur (7) raccordée à une tension secteur (6), à laquelle chaque circuit de commande (5) est raccordé pour l'alimentation des actionneurs (3) fonctionnant sur la tension secteur (6),
**caractérisé en ce**
**que** le dispositif de raccordement (4) est formé par un module d'alimentation secteur (16) et au moins un module de raccordement (17) disposé sur celui-ci, présentant chacun au moins un circuit de commande (5), que seul le module d'alimentation secteur (16) est raccordé à la tension secteur (6) et présente une alimentation secteur centrale (8) qui transforme la tension secteur (6) en une basse tension (9) inférieure, que chaque module de raccordement (17) est raccordé aussi bien à la ligne de tension secteur (7) du module d'alimentation secteur (16) pour l'alimentation des actionneurs (3) fonctionnant sur la tension secteur (6) qu'à une ligne basse tension (10) du module d'alimentation secteur (16) partant de l'alimentation secteur centrale (8) pour l'alimentation des circuits électroniques (11) des circuits de commande (5) qui fonctionnent sur la basse tension (9), et que dans tout le dispositif de raccordement (4), le côté fonctionnant sur la tension secteur (6) et le côté fonctionnant sur la basse tension (9) sont séparés l'un de l'autre par une séparation de potentiel (21).

2. Dispositif de raccordement selon la revendication 1, **caractérisé en ce que** la basse tension (9) est transmise à chaque circuit de commande (5) pour alimenter les sondes de température ambiante (2) fonctionnant sur la basse tension (9).

3. Dispositif de raccordement selon une des revendications précédentes, **caractérisé en ce que** le dispositif de raccordement (4) présente une horloge (12) et/ou une logique de pompe (13) et/ou une protection de vanne (14) dont les signaux sont transmis à chaque circuit de commande (5) via des lignes (15).

4. Dispositif de raccordement selon une des revendications précédentes, **caractérisé en ce qu'**un ou plusieurs circuits de commande (5) sont aussi disposés dans le module d'alimentation secteur (16).

5. Dispositif de raccordement selon une des revendications précédentes, **caractérisé en ce que** dans le module d'alimentation secteur (16), la ligne de tension secteur (7) et la ligne basse tension (10) s'étendent chacune jusqu'au côté de raccordement de module de sortie (18) du module d'alimentation secteur (16), auquel un module de raccordement (17) peut être raccordé par son côté de raccordement de module d'entrée (19).

6. Dispositif de raccordement selon une des revendications précédentes, **caractérisé en ce que** dans chaque module de raccordement (17), à partir de contacts de raccordement électrique sur son côté de raccordement de module d'entrée (19), les lignes de tension secteur et basse tension (7, 10) s'étendent jusqu'à des contacts de raccordement électrique sur son côté de raccordement de module de sortie (20).

7. Dispositif de raccordement selon la revendication 5 ou 6, **caractérisé en ce que** le côté de raccordement de module d'entrée (19) d'un module de raccordement (17) et le côté de raccordement de module de sortie (20) d'un autre module de raccordement (17) peuvent être raccordés l'un à l'autre.

8. Dispositif de raccordement selon une des revendications précédentes, **caractérisé en ce que** dans chaque module (16, 17), le côté fonctionnant sur la tension secteur (6) et le côté fonctionnant sur la basse tension (9) sont séparés l'un de l'autre par une séparation de potentiel (21).

9. Dispositif de raccordement selon une des revendications précédentes, **caractérisé en ce que** le module d'alimentation secteur (16) présente une horloge (12) et/ou une logique de pompe (13) et/ou une protection de vanne (14) dont les signaux sont transmis via des lignes (15) à des contacts de raccordement électrique du côté de raccordement de module de sortie (18) du module d'alimentation secteur (16) et de contacts de raccordement électrique du côté de raccordement de module d'entrée (19) à des contacts de raccordement électrique du côté de raccordement de module de sortie (20) d'un module de raccordement (17).

10. Installation de régulation de température ambiante (1) avec un dispositif de raccordement (4) selon une des revendications précédentes, dans laquelle une ou plusieurs sondes de température ambiante (2) fonctionnant sur la basse tension (9) ainsi qu'un ou plusieurs actionneurs (3) fonctionnant sur la tension secteur (6) sont raccordés à chaque circuit de commande (5).
